# EUROPÄISCHE PATENTSCHRIFT

(11) **EP 1 531 068 B1**
(45) Veröffentlichungstag und Bekanntmachung des Hinweises auf die Patenterteilung: **01.08.2007**
(21) Anmeldenummer: 04026261.0
(22) Anmeldetag: 05.11.2004
(51) Int. Cl.: B60H 1/00

(54) **Kraftfahrzeug-Klimaanlage**
Air conditioning system for a vehicle
Installation de climatisation pour véhicule

(30) Priorität: 13.11.2003 DE 10353191
(43) Veröffentlichungstag der Anmeldung: 18.05.2005
(73) Patentinhaber: Behr GmbH & Co. KG, 70469 Stuttgart (DE)
(72) Erfinder: Koukouravas, Evripidis, 72654 Neckartenzlingen (DE)

(56) Entgegenhaltungen:
- EP-A- 0 845 375
- DE-A1- 4 407 424
- DE-A1- 19 501 593
- DE-A1- 19 756 166

## Beschreibung

Die Erfindung betrifft eine Kraftfahrzeug-Klimaanlage.

Herkömmlicherweise werden bei Kraftfahrzeug-Klimaanlagen für die Temperaturschichtungen "Mitteldüse/Fußraum" und "Mitteldüse/Seitendüsen" je zwei getrennt ausgebildete Klappen verwendet, wobei jede einen eigenen Schrittmotor aufweist. Alternativ ist auch eine Koppelung möglich, so dass ein Schrittmotor mit einer entsprechend ausgelegten Kinematik erforderlich ist.

Das Dokument DE-A-197 56 166 (D1) offenbart als nächster Stand der Technik eine Kraftfahrzeug-Klimaanlage gemäß dem Oberbegriff des Anspruchs 1.

Es ist Aufgabe der Erfindung, eine kostengünstigere Kraftfahrzeug-Klimaanlage zur Verfügung zu stellen.

Diese Aufgabe wird gelöst durch eine Kraftfahrzeug-Klimaanlage mit den Merkmalen des Anspruchs 1. Vorteilhafte Ausgestaltungen sind Gegenstand der Unteransprüche.

Erfindungsgemäß ist eine Kraftfahrzeug-Klimaanlage vorgesehen, in welcher eine Mehrzahl von Luftkanälen mit die Luftströme in denselben regelnden Klappen vorgesehen sind, wobei eine Klappe vorgesehen ist, die mindestens zwei Luftkanäle regelt, welche der Temperaturschichtung der Luftströme dienen. Dadurch, dass nur eine Klappe erforderlich ist, die mehrere Luftkanäle regelt, ist lediglich ein Antrieb, insbesondere ein Schrittmotor, erforderlich, so dass Kosten eingespart werden können. Die Luftkanäle werden bevorzugt einer in Strömungsrichtung nach der Klappe angeordneten Stelle zusammengeführt, so dass die geschichtete Luft dem Fahrzeug-Innenraum zugeführt werden kann, wobei ein Luftkanal als Kaltluftbypass in den Mischraum mündet und zumindest ein Lufkanal als Schichtungskanal den Mischraum umgeht und in den Belüftungskanal einer Mittel- und Seitendüse mündet.Bevorzugt ist die Klappe mehrteilig ausgebildet, wobei die einzelnen Bereiche der Klappe starr miteinander verbunden sind. Hierfür können Schlitze in einer ansonsten durchgehenden Fläche vorgesehen sein, in welchen im eingebauten Zustand der Klappe Wände des Luftführungsgehäuses angeordnet sind.

Die Klappe ist bevorzugt zumindest in Hinblick auf die Bereiche der Klappe achssymmetrisch bezüglich der Mittelebene der Schwenkachse ausgebildet, wodurch sich die Auslegung der Klimaanlage vereinfacht.

Im Folgenden wird die Erfindung anhand eines Ausführungsbeispiels mit Varianten unter Bezugnahme auf die Zeichnung im Einzelnen erläutert. In der Zeichnung zeigen:

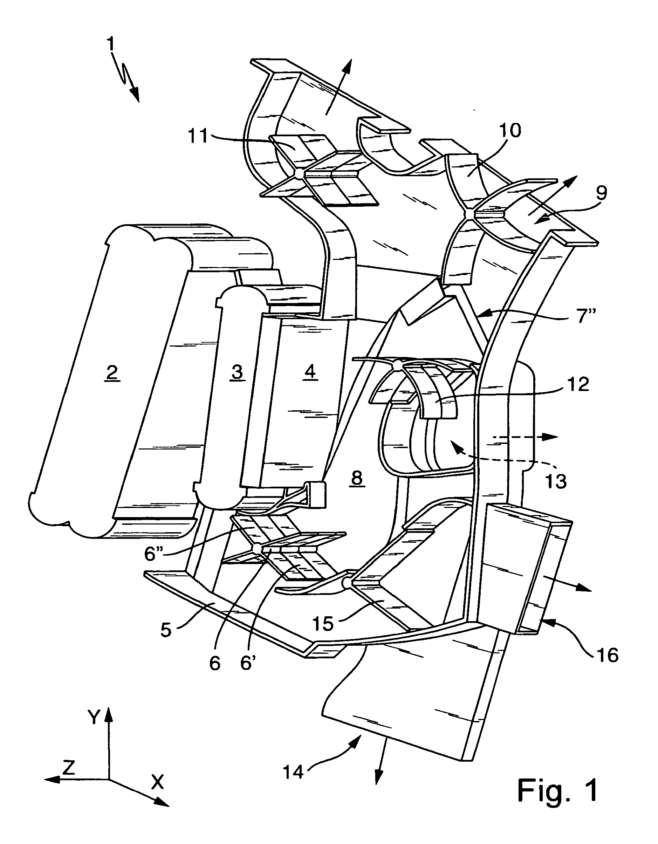

- Fig. 1: eine aufgeschnittene, perspektivische Darstellung einer erfindungsgemäßen Kraftfahrzeug-Klimaanlage mit einer Klappenanordnung,
- Fig. 2: die aufgeschnittene Klimaanlage von Fig. 1 aus einer anderen Perspektive, jedoch ohne Verdampfer,

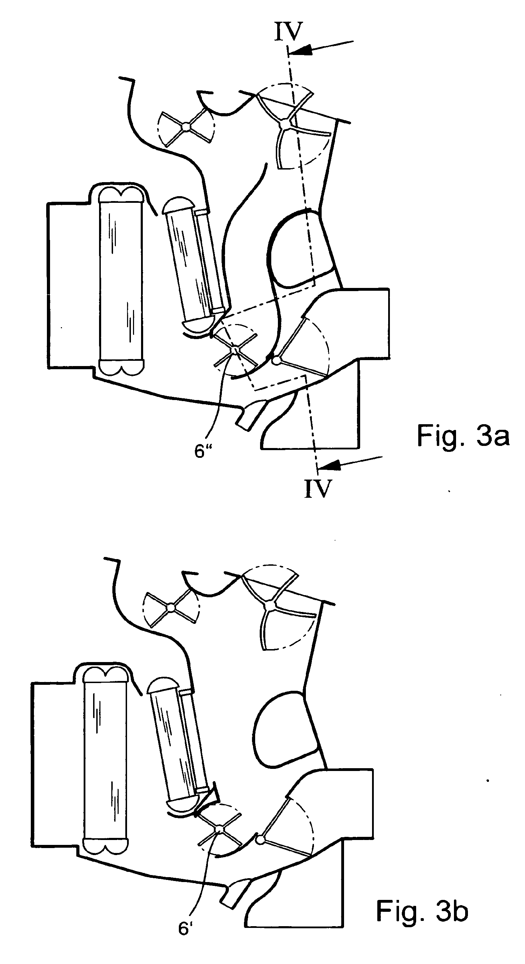

- Fig. 3a: einen Schnitt durch einen Schichtungskanal der Klimaanlage von Fig. 1,
- Fig. 3b: einen Schnitt durch einen Kaltluftbypass der Klimaanlage von Fig. 1,
- Fig. 4: einen Schnitt entlang Linie IV-IV in Figuren 3a und 3b,
- Fig. 5: eine Fig. 4 entsprechende Darstellung einer zweizonigen Klimaanlage,
- Fig. 6: eine Variante, und
- Fig. 7: eine Fig. 4 entsprechende Darstellung der Variante von Fig. 6.

Eine Kraftfahrzeug-Klimaanlage 1 weist einen Verdampfer 2 und einen Heizer 3 mit Zuheizer 4 auf, die in einem Luftführungsgehäuse 5 angeordnet sind. Das Luftführungsgehäuse 5 ist zur geschichteten Temperierung der Luft, d.h. dass Luft in horizontal übereinander angeordneten Zonen, wie Fußraum, Oberkörperbereich und Kopfbereich, getrennt und mit unterschiedlicher Temperatur eingeblasen werden kann, derart ausgebildet, dass der durch den Verdampfer 2 geleitete Luftstrom mittels einer mehrteiligen Klappe 6 am Heizer 3 mit Zuheizer 4 vorbei oder durch diesen geleitet werden kann, wobei beliebige Zwischenstellungen möglich sind. Hierbei kann der Luftstrom auf drei Kanäle verteilt werden, nämlich den Kaltluftbypass 7' (Bereich 6' der Klappe 6) und den linken und rechten Schichtungskanal 7". Durch die Schichtungskanäle 7" (Bereiche 6" der Klappe 6) kann Kaltluft gezielt zur Mittel- und Seitendüse (Belüftungs-Luftkanal 9 mit Belüftungs-Klappe 10) geführt werden, ohne dass Kaltluft in den Mischraum 8 gelangt, oder dass die Luftströme zusammengeführt werden, so dass sich eine geschichtete Luftströmung ausbildet.

Vom Mischraum 8 auch kann die temperierte Luft über die Entfroster-Klappe 11 in den zur Windschutzscheibe führenden Luftkanal gelangen. Ferner kann die temperierte Luft vom Mischraum 8 über die Belüftungs-Klappe 10 in den Belüftungs-Luftkanal 9 zur Mittel- und Seitendüse, über die Fußraum-Klappen 12 zum vorderen Fußraum (über den Luftkanal 13) und zum hinteren Fußraum (über den Luftkanal 14), und über die Temperatur-Klappe 15 in den der Fondbelüftung dienenden Luftkanal 16 gelangen. Dabei ermöglicht die Temperatur-Klappe 15 eine Temperaturabsenkung durch Beimischung kalter Luft, die direkt vom Verdampfer 2 kommt.

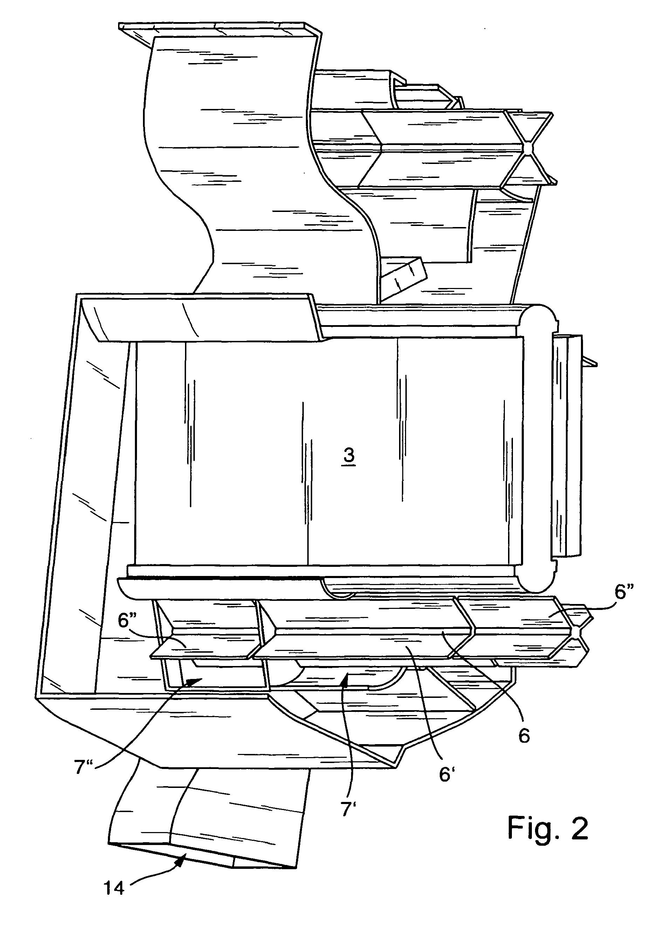

Auf Grund der mehrteiligen Ausgestaltung der Klappe 6, die auch in verschiedenen Gehäusebereichen angeordnet ist (vgl. Fig. 2), nämlich im Kaltluftbypass 7' und den beiden Schichtungskanälen 7", kann auf diese Klappe 6 auch als Klappenanordnung Bezug genommen werden, wobei die einzelnen Bereiche der Klappe 6 starr miteinander verbunden sind. Die Klappe 6 wird von einem einzigen Schrittmotor (nicht dargestellt) angetrieben.

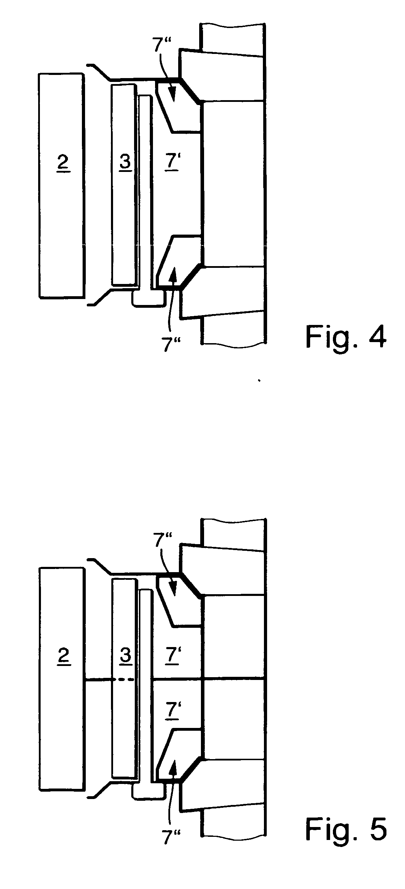

Die Klappe 6 ist bei einer einzonigen Klimaanlage, wie zuvor beschrieben, eingliedrig ausgebildet und lediglich im Bereich der Flanken auf Grund der Trennwände für die Montage geschlitzt. Im Falle einer zweizonigen Klimaanlage ist die Klappe mittig (vgl. Fig. 5) geteilt, d.h. sie ist zweigliedrig ausgebildet, und es sind Trennwände zur Trennung der Luftströme beider Zonen vorgesehen. Zum Antrieb einer solchen zweiteiligen Klappe sind zwei Schrittmotoren, d.h. ein Schrittmotor je Klappenhälfte, vorgesehen, wobei die beiden Klappen die gleiche Schwenkachse aufweisen.

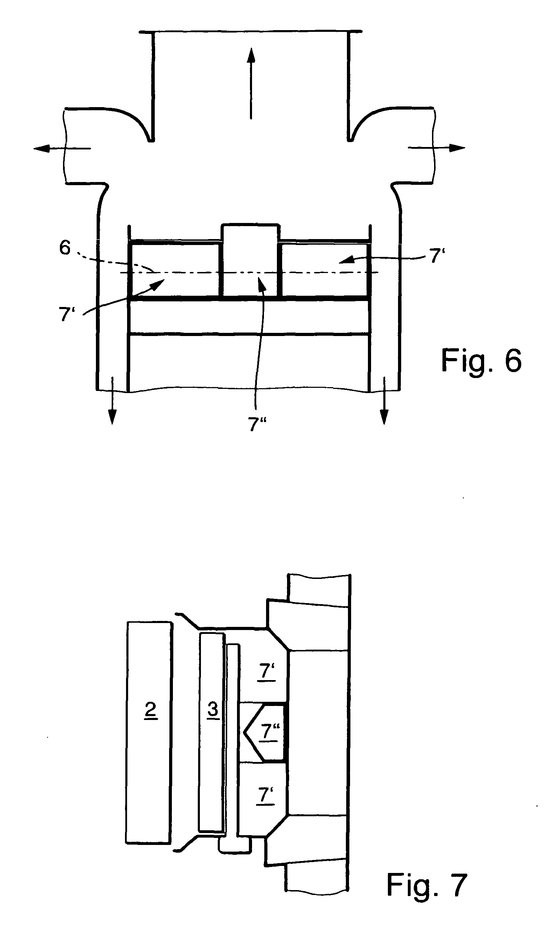

Figuren 6 und 7 zeigen eine Variante mit einem mittig angeordneten Schichtungskanal 7" und zwei außen angeordneten Kaltluftbypässen 7'. Auch hierbei werden alle Kanäle 7' und 7" durch eine einzige Klappe 6 geregelt, welche durchgehend ausgebildet ist.

Gemäß einer nicht in der Zeichnung dargestellten weiteren Variante ist bei einer entsprechenden zweizonigen Klimaanlage die Klappe 6 mittig geteilt, es sind zwei Antriebe und Trennwände vorgesehen, wie unter Bezugnahme auf Fig. 5 beschrieben.

### Bezugszeichenliste

- 1: Kraftfahrzeug-Klimaanlage
- 2: Verdampfer
- 3: Heizer
- 4: Zuheizer
- 5: Luftführungsgehäuse
- 6: Klappe
- 6', 6": Bereich
- 7': Kaltluftbypass
- 7": Schichtungskanal
- 8: Mischraum
- 9: Belüftungs-Luftkanal
- 10: Belüftungs-Klappe
- 11: Entfroster-Klappe
- 12: Fußraum-Klappe
- 13: Luftkanal
- 14: Luftkanal
- 15: Temperatur-Klappe
- 16: Luftkanal

## Patentansprüche

1. Kraftfahrzeug-Klimaanlage mit einem Verdampfer (2), einem Heizer (3) und diesen nachgeordnet einem Mischraum (8) und eine Mehrzahl von Luftkanälen (7', 7") mit, die Luftströme in denselben regelnden Klappen, wobei die Luftkanäle (7', 7") den Heizkörper umgehen und eine Klappe (6) vorgesehen ist, die mindestens zwei Luftkanäle (7', 7") regelt, welche der Temperaturschichtung der Luftströme dienen, **dadurch gekennzeichnet, dass** zumindest ein Luftkanal (7') als Kaltluftbypass in den Mischraum mündet und zumindest ein Luftkanal (7") als Schichtungskanal den Mischraum umgeht und in einen Belüftungskanal einer Mittel- und Seitendüse mündet.

2. Kraftfahrzeug-Klimaanlage nach Anspruch 1, **dadurch gekennzeichnet, dass** die Luftkanäle (7', 7") an einer in Strömungsrichtung nach der Klappe (6) angeordneten Stelle zusammengeführt werden.

3. Kraftfahrzeug-Klimaanlage nach Anspruch 1 oder 2, **dadurch gekennzeichnet, dass** die Klappe (6) mehrteilig ausgebildet ist, wobei die einzelnen Bereiche (6', 6") der Klappe (6) starr miteinander verbunden sind.

4. Kraftfahrzeug-Klimaanlage nach Anspruch 3, **dadurch gekennzeichnet, dass** die einzelnen Bereiche (6', 6") der Klappe (6) durch Schlitze getrennt sind.

5. Kraftfahrzeug-Klimaanlage nach einem der vorhergehenden Ansprüche, **dadurch gekennzeichnet, dass** die Klappe (6) zumindest in Hinblick auf die Bereiche (6', 6") der Klappe (6) achssymmetrisch bezüglich der Mittelebene der Schwenkachse ausgebildet ist.

6. Kraftfahrzeug-Klimaanlage nach einem der vorhergehenden Ansprüche, **dadurch gekennzeichnet, dass** ein Kaltluftbypass (7') mittig zwischen zwei Schichtungskanälen (7") angeordnet ist.

7. Kraftfahrzeug-Klimaanlage nach einem der Ansprüche 1 bis 5, **dadurch gekennzeichnet, dass** ein Schichtungskanal (7") mittig zwischen zwei Kaltluftbypässen (7') angeordnet ist.

8. Kraftfahrzeug-Klimaanlage nach einem der vorhergehenden Ansprüche, **dadurch gekennzeichnet, dass** zum Antrieb der Klappe (6) ein Motor vorgesehen ist.

9. Kraftfahrzeug-Klimaanlage nach einem der vorhergehenden Ansprüche, **dadurch gekennzeichnet, dass** die Klimaanlage (1) eine zweizonige Klimaanlage ist, wobei zwei Klappen (6) mit der gleichen Schwenkachse vorgesehen sind, die jeweils einen Kaltluftbypass (7') und einen Schichtungskanal (7") regeln.

## Claims

1. An air conditioning system for a motor vehicle having an evaporator (2), a heater (3) and downstream of these a mixing chamber (8) and a plurality of air channels (7', 7") with flaps which regulate the air flows therein, said air channels (7', 7") bypassing the heater and a flap (6) being provided which regulates at least two air channels (7', 7") which serve to temperature layer the air flows,
**characterised in that**
at least one air channel (7') functioning as a cold air bypass flows into the mixing chamber and at least one air channel (7") functioning as a flow layering channel bypasses the mixing chamber and flows into a ventilation channel of a central and lateral nozzle.

2. An air conditioning system for a motor vehicle in accordance with claim 1,
**characterised in that**
the air channels (7', 7") are brought together at a point positioned downstream of the flap (6) in the direction of flow.

3. An air conditioning system for a motor vehicle in accordance with claim 1 or 2,
**characterised in that**
the flap (6) is designed in several parts, the individual areas (6' 6") of the flap (6) being connected rigidly to one another.

4. An air conditioning system for a motor vehicle in accordance with claim 3,
**characterised in that**
the individual areas (6' 6") of the flap (6) are separated by slits.

5. An air conditioning system for a motor vehicle in accordance with one of the preceding claims,
**characterised in that**
the flap (6) is designed to be asymmetrical in relation to the centre plane of the axis of pivoting at least in respect of the areas (6' 6") of the flap (6).

6. An air conditioning system for a motor vehicle in accordance with one of the preceding claims,
**characterised in that**
a cold air bypass (7') is positioned centrally between two flow layering channels (7").

7. An air conditioning system for a motor vehicle in accordance with one of claims 1 to 5,
**characterised in that**
a flow layering channel (7") is positioned centrally between two cold air bypasses (7').

8. An air conditioning system for a motor vehicle in accordance with one of the preceding claims,
**characterised in that**
a motor is provided in order to drive the flap (6).

9. An air conditioning system for a motor vehicle in accordance with one of the preceding claims,
**characterised in that**
the air conditioning system (1) is a two-zone air conditioning system, two flaps (6) with the same axis of pivoting being provided to regulate a cold air bypass (7') and a flow layering channel (7").

## Revendications

1. Installation de climatisation pour véhicule avec un évaporateur (2), un dispositif de chauffage (3) et, en aval de ces derniers, un espace de mélange (8) et plusieurs canaux à air (7', 7'') avec des volets qui régulent les flux d'air dans ces derniers, les canaux à air (7', 7' ') contournant le dispositif de chauffage et un volet (6) qui régule au moins deux canaux à air (7', 7") qui servent à générer des couches de température dans les flux d'air étant prévu, **caractérisée en ce qu'**au moins un canal à air (7') aboutit dans l'espace de mélange sous forme de dérivation d'air froid et qu'au moins un canal à air (7") contourne l'espace de mélange sous forme de canal de génération de couches et aboutit dans un canal de ventilation d'une buse médiane et latérale.

2. Installation de climatisation pour véhicule selon la revendication 1, **caractérisée en ce que** les canaux à air (7', 7'') sont réunis à un endroit disposé en aval du volet (6) dans le sens d'écoulement.

3. Installation de climatisation pour véhicule selon la revendication 1 ou 2, **caractérisée en ce que** le volet (6) est réalisé en plusieurs parties, les différentes zones (6', 6' ') du volet (6) étant reliées l'une à l'autre de manière rigide.

4. Installation de climatisation pour véhicule selon la revendication 3, **caractérisée en ce que** les différentes zones (6', 6' ') du volet (6) sont séparées par des fentes.

5. Installation de climatisation pour véhicule selon une des revendications précédentes, **caractérisée en ce que** le volet (6) est réalisé, du moins en ce qui concerne les zones (6', 6' ') du volet (6), symétrique par rapport à l'axe du plan médian de l'axe de pivotement.

6. Installation de climatisation pour véhicule selon une des revendications précédentes, **caractérisée en ce qu'**une dérivation d'air froid (7') est disposée au milieu entre deux canaux de génération de couches (7'').

7. Installation de climatisation pour véhicule selon une des revendications 1 à 5, **caractérisée en ce qu'**un canal de formation de couches (7 ' ') est disposé au milieu entre deux dérivations d'air froid (7').

8. Installation de climatisation pour véhicule selon une des revendications précédentes, **caractérisée en ce qu'**un moteur est prévu pour l'entraînement du volet (6).

9. Installation de climatisation pour véhicule selon une des revendications précédentes, **caractérisée en ce que** l'installation de climatisation (1) est une installation de climatisation à deux zones, deux volets (6) avec le même axe de pivotement qui régulent respectivement une dérivation d'air froid (7') et un canal de génération de couches (7' ') étant prévus.
